# EUROPEAN PATENT APPLICATION

(11) **EP 2 826 749 A1**
(43) Date of publication of application: **21.01.2015**
(21) Application number: 13760325.4
(22) Date of filing: 14.03.2013
(51) Int. Cl.: C01G 23/00, H01M 4/485

(54) **LITHIUM TITANATE AND PRODUCTION METHOD AND USE FOR SAME**

(30) Priority: 16.03.2012 JP 2012060301
(71) Applicant: Tayca Corporation, Osaka-shi, Osaka 551-0022 (JP)
(72) Inventor: WATANABE, Keiichi, Osaka-shi Osaka 551-0022 (JP); NISHIDA, Shuji, Osaka-shi Osaka 551-0022 (JP)
(74) Representative: Grosse, Felix Christopher
(86) International application number: PCT/JP2013/057158
(87) International publication number: WO 2013/137381

(57) **Abstract**

An object is to provide a method for manufacturing, in an industrially advantageous manner, lithium titanate (Li₄Ti₅O₁₂) which is of a single phase, is excellent in rate performance, and can be easily handled. In the method for manufacturing the lithium titanate (Li₄Ti₅O₁₂) which is of a substantially single phase, a raw material powder consisting of a lithium compound and a raw material powder consisting of a titanic acid compound are mixed and the resultant mixture is calcined. The method for manufacturing the lithium titanate is characterized in that a lithium carbonate is used as the lithium compound and metatitanic acid or orthotitanic acid is used as the titanic acid compound. Provided is lithium titanate characterized in that a penetration speed coefficient of the lithium titanate, obtained by employing the method, to a nonaqueous electrolyte is larger than a penetration speed coefficient of lithium titanate, obtained by using a lithium hydroxide as the lithium compound, to the same nonaqueous electrolyte, and a specific surface area thereof is 10 m²/g or less.

## Description

### TECHNICAL FIELD

The present invention relates to a method for efficiently and inexpensively manufacturing lithium titanate (Li₄Ti₅O₁₂) which is of a substantially single phase and satisfies demand characteristics as a negative electrode or positive electrode active material of a lithium ion secondary battery, lithium titanate obtained by employing the manufacturing method or applications thereof, and the like.

### BACKGROUND ART

Since as compared with a lead battery and a nickel hydrogen battery, a lithium ion secondary battery has a high energy density as its characteristics, research and development thereof has actively been conducted, focusing on an on-vehicle battery. In particular, in the applications thereof, in addition to the high energy density, excellent high output charging and discharging performance, a long service life, and high safety are required. As a negative electrode or positive electrode active material satisfying these demand characteristics, lithium titanate (Li₄Ti₅O₁₂) has been attracting attention.

As described above, it is indispensable for the lithium titanate (Li₄Ti₅O₁₂) as the negative electrode or positive electrode active material to have a capacity upon low rate charging and discharging, which is approximate to 175 mAh/g, a theoretical value. To have the above-mentioned capacity, it is required for the lithium titanate (Li₄Ti₅O₁₂ to be of a single phase. In addition thereto, in the application in which high output charging and discharging is performed, such as an on-vehicle application, it is also required that a reduction in a capacity upon high rate charging and discharging is small, that is, rate performance is favorable.

To satisfy the above-mentioned requirement, it is required to increase a specific surface area of the lithium titanate and thereby increase an area involved in charging and discharging reaction. On the other hand, in a case where the specific surface area is large, when the lithium titanate is dispersed together with a conductive assistant, a binder, and a solvent, and an electrode mixture is slurried, a viscosity is increased, thereby making the handling difficult. Further, because side reaction which may cause a deterioration in cycle characteristics and a reduction in safety also may easily occur, a smaller specific surface area is favorable. As described above, to satisfy all of the demand characteristics, it is required to find out a manufacturing method in which lithium titanate (Li₄Ti₅O₁₀) being of a single phase and having an appropriate specific surface area can be obtained.

Conventionally, as the most common method for manufacturing the lithium titanate (Li₄Ti₅O₁₂), as disclosed in, for example, Japanese Patent Application Laid-Open Publication No. H07-320784 (Patent Literature 1), Japanese Patent Application Laid-Open Publication No. 2001-192208 (Patent Literature 2), and the like, there has been known a method in which an anatase-type titanium dioxide and a lithium hydroxide are mixed and the resultant mixture is calcined at 800°C or more in an oxygen atmosphere. Since a specific surface area of the lithium titanate which can be obtained by this manufacturing method is comparatively low, that is, 10 m²/g or less, a viscosity upon preparing an electrode mixture slurry is low, thereby making the handling easy. In addition, in a case where a lithium ion secondary battery is produced by using the lithium titanate which can be obtained by the above-described method, a deterioration in cycle characteristics less likely occurs and safety is high. However, because a reduction in a capacity of the above-mentioned lithium ion secondary battery upon high output charging and discharging is large, that is, rate performance is low, it is difficult to adopt the above-mentioned lithium ion secondary battery for the on-vehicle application and the like.

Therefore, there has been proposed lithium titanate (Li₄Ti₅O₁₂) whose specific surface area is comparatively large. For example, in Japanese Patent No. 3894614 (Patent Literature 3), a method for manufacturing lithium titanate whose specific surface area is 10 to 300 m²/g by subjecting orthotitanic acid and a lithium hydroxide to hydrothermal treatment has been disclosed. Since the lithium titanate which can be obtained by this manufacturing method has a large area involved in charging and discharging reaction, a reduction in a capacity upon high output charging and discharging is small, that is, rate performance is favorable. On the other hand, because an oil absorption of the lithium titanate which can be obtained by the above-described method is high, a viscosity upon preparing an electrode mixture slurry is high, thereby making the handing difficult. Further, the lithium titanate which can be obtained by the above-described manufacturing method may easily cause side reaction which may cause a deterioration in cycle characteristics and a reduction in safety, thereby making it difficult to ensure safety.

As described above, the rate performance, the cycle characteristics, the safety, and the handleability of the lithium titanate (Li₄Ti₅O₁₂) are in a trade-off relationship, and satisfying all of the demand characteristics is an extremely difficult problem.

Further, when the lithium titanate is industrially manufactured, in addition to the satisfaction of the demand characteristics as the battery active material, profitability is an extremely important factor. In general, in order to manufacture inexpensive lithium titanate, it is preferable that a solid phase method in which a raw material powder consisting of a lithium compound and a raw material powder consisting of a titanium compound are mixed and the resultant mixture is calcined is employed, and further, as the raw material powder consisting of the lithium compound, a lithium carbonate is used, rather than a lithium hydroxide, since cost can be reduced.

However, in view of a formation mechanism of the lithium titanate in the solid phase method, it is difficult to use the lithium carbonate. In other words, when the lithium hydroxide is used, the lithium hydroxide (with a melting point of 462°C) melts during calcining, and the raw material powder consisting of the titanium compound and the lithium component reacts to each other in molten salt, thereby forming the lithium titanate. On the other hand, when the lithium carbonate (with a melting point of 723°C), because its melting point is high, the lithium titanate is not formed by calcining at a low temperature, and because a Li component is volatilized by calcining at a high temperature, it is difficult to obtain a single phase of the lithium titanate. Therefore, in the below-described solid phase method, a method for manufacturing the lithium titanate using the lithium carbonate has been proposed.

For example, in Japanese Patent Application Laid-Open Publication No. 2000-302547 (Patent Literature 4), there has been proposed a method in which a rutile-type titanium dioxide and a lithium carbonate are mixed; thereafter, the resultant mixture is subjected to pressure forming and then, to a preliminary calcination at 700°C for 4.5 hours in an oxidizing atmosphere; a mixture consisting of TiO₂ and Li₂TiO₃ is thereby obtained; and next, the obtained mixture is subjected to a main calcination at 800°C for 4.5 hours, thereby manufacturing Li₄Ti₅O₁₂. However, in this manufacturing method, because the two steps of the preliminary calcination and the main calcination are required, a cost is high. In addition, because the pressure forming is required, the obtained lithium titanate becomes a solid sintered compact, thereby making it easy for coarse particles to remain in the product. Further, it is difficult to control a volatilization volume of the Li component and thus, to obtain the Li₄Ti₅O₁₂ which is of a single phase.

As described above, in the solid phase method in which the lithium carbonate (with a melting point 723°C) is used, instead of the lithium hydroxide, the manufacturing steps can be made comparatively simplified. However, because its melting point is high, at a temperature lower than the melting point, the lithium titanate (Li₄Ti₅O₁₂) is not formed, and on the other hand, at a temperature higher than 800°C, the Li component is volatilized, thereby leading to a problem in that it is difficult to efficiently obtain the lithium titanate (Li₄Ti₅O₁₂) which is of the single phase.

### CITATION LIST

### PATENT LITERATURE

Patent Literature 1: Japanese Patent Application Laid-Open Publication No. H07-320784
Patent Literature 2: Japanese Patent Application Laid-Open Publication No. 2001-192208
Patent Literature 3: Japanese Patent No. 3894614
Patent Literature 4: Japanese Patent Application Laid-Open Publication No. 2000-302547

### SUMMARY OF THE INVENTION

### TECHNICAL PROBLEM

Therefore, in view of the above-described problems, the present invention was made. An object of the present invention is to provide a method for manufacturing, in an industrially advantageous manner, lithium titanate (Li₄Ti₅O₁₂) which is excellent in rate performance, can be easily handled, and is of a single phase, by using a lithium carbonate as a lithium source.

### SOLUTION TO PROBLEM

In order to solve the above-described problems, the present inventors and the like have devoted themselves to studies. As a result, the present inventors found conditions that when a titanic acid compound is used as a titanium source, even by using a lithium carbonate as a lithium source, lithium titanate which is excellent in battery characteristics and is of a substantially single phase can be manufactured in an industrially advantageous manner at a comparatively low temperature in a calcining temperature range having no volatilization of a Li component, that is, a range of 723°C to 800°C without conducting two steps of calcination as well as pressure forming. Furthermore, the present inventors found that because a specific surface area of the obtained lithium titanate is 10 m²/g or less, a viscosity upon preparing an electrode mixture slurry is low and the lithium titanate is thereby easily handled, and because wettability to a nonaqueous electrolyte is favorable, insertion and desorption reaction of Li ions in charging and discharging smoothly proceeds and as a result, the lithium titanate becomes excellent in rate performance, thus having reached the completion of the present invention.

In other words, the lithium titanate according to the present invention obtained by using the lithium carbonate as a starting material is excellent in the wettability to the nonaqueous electrolyte. Specifically, the lithium titanate according to the present invention is characterized in that a penetration speed coefficient thereof defined as described later, which is an index indicating the wettability, is larger than a penetration speed coefficient of lithium titanate, obtained by using a lithium hydroxide as the starting material, to the same nonaqueous electrolyte.

More specifically, the lithium titanate according to the present invention is characterized in that the penetration speed coefficient thereof is 0.03 g²/s or more or 0.04 g²/s or more and a specific surface area thereof is 10 m²/g or less or 4.0 m²/g or less. In other words, the lithium titanate according to the present invention is characterized in that the penetration speed coefficient of the lithium titanate obtained by using the lithium carbonate as the lithium source is large by at least 10% or more, as compared with the penetration speed coefficient of the lithium titanate obtained by using the lithium hydroxide as the starting material.

In addition, the method for manufacturing the lithium titanate according to the present invention, in which a solid phase method is employed, is characterized in that the lithium carbonate is used as the lithium source and metatitanic acid or orthotitanic acid is used as the titanium source. More specifically, the present invention is characterized in that in the method according to the present invention in which a raw material powder consisting of the lithium compound and a raw material powder consisting of the titanic acid compound are mixed and the resultant mixture is calcined, thereby manufacturing lithium titanate (Li₄Ti₅O₁₂), the lithium compound is the lithium carbonate and the titanic acid compound is the metatitanic acid or the orthotitanic acid. Further, it is preferable that a temperature at which the calcining is conducted is in a range of 723°C to 950°C.

As described above, because the wettability of the lithium titanate according to the present invention to the nonaqueous electrolyte is favorable, the insertion and desorption reaction of the Li ions in charging and discharging smoothly proceeds, and as a result, the lithium titanate is excellent in the rate performance. Further, because the specific surface area of the lithium titanate according to the present invention is 10 m²/g or less or 4.0m ²/g or less, the viscosity upon preparing the electrode mixture slurry is low and the lithium titanate is thereby excellent in handleability. In addition, according to the present invention, in the solid phase method, the lithium carbonate is used as the lithium source, instead of the lithium hydroxide, thereby allowing manufacturing steps to be comparatively simplified and enabling the lithium titanate (Li₄Ti₅O₁₂) to be inexpensively manufactured.

In addition, according to the present invention, the titanic acid compound combined with the lithium carbonate is the metatitanic acid or the orthotitanic acid, and the metatitanic acid is preferable.

When as the titanic acid compound combined with the lithium carbonate, the metatitanic acid or the orthotitanic acid is used, even by using the lithium carbonate as the starting material, the lithium titanate (Li₄Ti₅O₁₂) can be obtained at a relatively low temperature at which the calcination is conducted, which is preferably in a range of 723°C to 850°C, is more preferably in a range of 723°C to 800°C, and is most preferably 750°C. In addition, at any temperature in the above-mentioned ranges or the above-mentioned temperature, the lithium titanate (Li₄Ti₅O₁₂) can be obtained by taking 20 hours or less for which the calcination is conducted.

Therefore, according to the manufacturing method of the present invention, upon obtaining the lithium titanate (Li₄Ti₅O₁₂), it does not occur that lithium titanate other than (Li₄Ti₅O₁₂) is by-produced and that due to the occurrence of a volatilization loss of a lithium element or a lithium compound, it is made difficult to control an atom ratio of Li/Ti, and a problem in that a raw material titanium dioxide or coarse particles remain in the product is solved.

As a result of this, according to the manufacturing method of the present invention, in powder X-ray diffraction measurement, with respect to a peak intensity exhibited when 2θ of Li₄Ti₅O₁₂ is 18°, relative intensities of an anatase-type titanium dioxide, a rutile-type titanium dioxide, the lithium carbonate, and Li₂TiO₃ are 5% or less, thus allowing the lithium titanate (Li₄Ti₅O₁₂), which is excellent in crystallinity as mentioned above and is of a substantially single phase, to be efficiently obtained.

In addition, since the lithium titanate (Li₄Ti₅O₁₂) obtained by employing the manufacturing method according to the present invention can satisfy high demand characteristics such as high charging and discharging characteristics as the active material for the lithium ion secondary battery, the lithium titanate is suitable for use as a negative electrode active material or/and a positive electrode active material for the lithium ion secondary battery.

### ADVANTAGEOUS EFFECTS OF THE INVENTION

According to the present invention, lithium titanate which is excellent in rate performance and can be easily handled can be obtained, lithium titanate which can satisfy high demand characteristics of a lithium ion secondary battery typified by an on-vehicle battery and a method for manufacturing the lithium titanate can be provided. Further, according to the manufacturing method of the present invention, by using the lithium carbonate as the lithium source, the lithium titanate (Li₄Ti₅O₁₂) which is of a substantially single phase can be efficiently manufactured in an industrially advantageous manner.

### BRIEF DESCRIPTION OF THE DRAWINGS

Fig. 1 is a graph showing a penetration speed coefficient obtained by an initial gradient of a change in a value of the square of a weight of a penetrated electrolyte in Example 2 and Comparative Example 1.
Fig. 2 is a graph showing a penetration speed coefficient obtained by an initial gradient of a change in a value of the square of a weight of a penetrated electrolyte in Example 5 and Comparative Example 9.

### DESCRIPTION OF EMBODIMENTS

Hereinafter, examples of the present invention will be described in detail. It is to be noted that the present invention is not limited to the below-described examples and a variety of modifications coming within the scope not deviating from technical ideas of the present invention should be possible.

### [EXAMPLES]

### [Example 1]

Metatitanic acid and a lithium carbonate were measured so as to allow a molar ratio of Li and Ti to be 4 : 5, these were mixed by using a Henschel mixer, and thereafter, the resultant mixture was subjected to calcination at a temperature of 723°C for 20 hours in the atmosphere, thereby obtaining lithium titanate.

### [Example 2]

Lithium titanate was obtained by employing the same method as in Example 1, except that a calcining temperature was 750°C.

### [Example 3]

Lithium titanate was obtained by employing the same method as in Example 1, except that a calcining temperature was 850°C.

### [Example 4]

Lithium titanate was obtained by employing the same method as in Example 1, except that a calcining temperature was 950°C.

### [Example 5]

Lithium titanate was obtained by employing the same method as in Example 2, except that orthotitanic acid was used, instead of the metatitanic acid.

### [Example 6]

Lithium titanate was obtained by employing the same method as in Example 2, except that orthotitanic acid was used, instead of the metatitanic acid and a calcining temperature was 950°C.

### [Comparative Example 1]

Lithium titanate was obtained by employing the same method as in Example 2, except that a lithium hydroxide was used, instead of the lithium carbonate.

### [Comparative Example 2]

Lithium titanate was obtained by employing the same method as in Example 2, except that an anatase-type titanium dioxide (AMT-400, manufactured by TAYCA CORPORATION) was used, instead of the metatitanic acid.

### [Comparative Example 3]

Lithium titanate was obtained by employing the same method as in Example 2, except that an anatase-type titanium dioxide (AMT-400, manufactured by TAYCA CORPORATION) was used, instead of the metatitanic acid and a calcining temperature was 850°C.

### [Comparative Example 4]

Lithium titanate was obtained by employing the same method as in Example 2, except that an anatase-type titanium dioxide (AMT-400, manufactured by TAYCA CORPORATION) was used, instead of the metatitanic acid and a calcining temperature was 950°C.

### [Comparative Example 5]

Lithium titanate was obtained by employing the same method as in Example 2, except that an anatase-type titanium dioxide (JA-1, manufactured by TAYCA CORPORATION) was used, instead of the metatitanic acid.

### [Comparative Example 6]

Lithium titanate was obtained by employing the same method as in Example 2, except that an anatase-type titanium dioxide (JA-1, manufactured by TAYCA CORPORATION) was used, instead of the metatitanic acid and a calcining temperature was 950°C.

### [Comparative Example 7]

Lithium titanate was obtained by employing the same method as in Example 2, except that a rutile-type titanium dioxide (JR, manufactured by TAYCA CORPORATION) was used, instead of the metatitanic acid.

### [Comparative Example 8]

Lithium titanate was obtained by employing the same method as in Example 2, except that a rutile-type titanium dioxide (JR, manufactured by TAYCA CORPORATION) was used, instead of the metatitanic acid and a calcining temperature was 950°C.

### [Comparative Example 9]

Lithium titanate was obtained by employing the same method as in Example 5, except that a lithium hydroxide was used, instead of the lithium carbonate.

With respect to the obtained each lithium titanate, powder X-ray diffraction measurement was conducted, the presence and absence of the Li₄Ti₅O₁₂ (2θ = 18°) as well as the anatase-type TiO₂ (2θ = 24°), the rutile-type TiO₂ (2θ = 27°), the Li₂CO₃ (2θ = 31.5°), and the Li₂TiO₃ (2θ = 43.4°) which were impurities were confirmed, and further, relative intensities of these were calculated. The result is shown in Table 1.

**[Table 1]**

| | Ti Raw Material | Li Raw Material | Calcining Temperature (°C) | Relative Intensity | | | | |
|---|---|---|---|---|---|---|---|---|
| | | | | Li₄Ti₅O₁₂ | TiO₂ | TiO₂ | Li₂CO₃ | Li₂TiO₃ |
| | | | | (18°) | (24°) | (27°) | (31.5°) | (43.4°) |
| Example 1 | Metatitanic Acid | Lithium Carbonate | 723 | 100 | 2 | 3 | 0 | 5 |
| Example 2 | Metatitanic Acid | Lithium Carbonate | 750 | 100 | 1 | 2 | 0 | 5 |
| Example 3 | Metatitanic Acid | Lithium Carbonate | 850 | 100 | 0 | 1 | 0 | 3 |
| Example 4 | Metatitanic Acid | Lithium Carbonate | 950 | 100 | 0 | 0 | 0 | 2 |
| Example 5 | Orthotitanic Acid | Lithium Carbonate | 750 | 100 | 0 | 0 | 0 | 4 |
| Example 6 | Orthotitanic Acid | Lithium Carbonate | 950 | 100 | 0 | 0 | 0 | 1 |
| Comparative Example 1 | Metatitanic Acid | Lithium Hydroxide | 750 | 100 | 0 | 5 | 0 | 3 |
| Comparative Example 2 | AMT-400 | Lithium Carbonate | 750 | 100 | 7 | 3 | 10 | 12 |
| Comparative Example 3 | AMT-400 | Lithium Carbonate | 850 | 100 | 1 | 9 | 5 | 7 |
| Comparative Example 4 | AMT-400 | Lithium Carbonate | 950 | 100 | 0 | 15 | 0 | 5 |
| Comparative Example 5 | JA-1 | Lithium Carbonate | 750 | 100 | 0 | 37 | 13 | 22 |
| Comparative Example 6 | JA-1 | Lithium Carbonate | 950 | 100 | 0 | 29 | 0 | 2 |
| Comparative Example 7 | JR | Lithium Carbonate | 750 | 100 | 0 | 92 | 45 | 36 |
| Comparative Example 8 | JR | Lithium Carbonate | 950 | 100 | 0 | 57 | 0 | 1 |
| Comparative Example 9 | Orthotitanic Acid | Lithium Hydroxide | 750 | 100 | 0 | 2 | 0 | 4 |

As shown in Table 1, in the method in which the raw material powder consisting of the lithium compound and the raw material powder consisting of the titanic acid compound were mixed and the resultant mixture was calcined, thereby manufacturing the lithium titanate, when the lithium carbonate was used as the lithium compound and the metatitanic acid or the orthotitanic acid was used as the titanic acid compound, the lithium titanate (Li₄Ti₅O₁₂) which was of a substantially single phase, in which with respect to a peak intensity exhibited when 2θ of Li₄Ti₅O₁₂ was 18°, respective relative intensities of the anatase-type titanium dioxide, the rutile-type titanium dioxide, the lithium carbonate, and Li₂TiO₃ were 5% or less, was obtained (refer to Examples 1 to 6).

In addition, the lithium titanate obtained by the manufacturing method according to the present invention exhibited quality equivalent to or equal to or greater than quality exhibited by the lithium titanate (refer to Comparative Example 1 and Comparative Example 9) obtained when the lithium hydroxide was used as the lithium source. It was also found from this that the manufacturing method according to the present invention is useful to obtain the lithium titanate having extremely little impurities or the like. Therefore, according to the manufacturing method of the present invention, the lithium titanate (Li₄Ti₅O₁₂) which is of the substantially single phase can be efficiently and inexpensively manufactured.

On the other hand, in Comparative Examples 2 to 8, in each of which as the titanic acid compound combined with the lithium carbonate, instead of the metatitanic acid or the orthotitanic acid, the titanium dioxide such as the anatase-type titanium dioxide or the rutile-type titanium dioxide was used, in the powder X-ray diffraction measurement, with respect to the peak intensity exhibited when 2θ of Li₄Ti₅O₁₂ was 18°, a relative intensity of the anatase-type titanium dioxide was 7% as a maximum (Comparative Example 2); a relative intensity of the rutile-type titanium dioxide was 92% as a maximum (Comparative Example 7); a relative intensity of the lithium carbonate was 45% as a maximum (Comparative Example 7); and a relative intensity of Li₂TiO₃ was 36% as a maximum (Comparative Example 7), thus showing that the raw material titanium dioxide remained in the product. Hence, the lithium titanate (Li₄Ti₅O₁₂) which was of the substantially single phase could not be obtained.

Next, a specific surface area was measured by employing a nitrogen gas adsorption method, and a molar ratio of Li and Ti was measured through an IPC emission spectrochemical analysis. The result is shown in Table 2.

**[Table 2]**

| | Ti Raw Material | Li Raw Material | Calcining Temperature (°C) | Li/Ti | Specific Surface Area (m²/g) |
|---|---|---|---|---|---|
| Example 1 | Metatitanic Acid | Lithium Carbonate | 723 | 0.80 | 3.0 |
| Example 2 | Metatitanic Acid | Lithium Carbonate | 750 | 0.80 | 2.5 |
| Example 3 | Metatitanic Acid | Lithium Carbonate | 850 | 0.80 | 1.5 |
| Example 4 | Metatitanic Acid | Lithium Carbonate | 950 | 0.80 | 0.5 |
| Example 5 | Orthotitanic Acid | Lithium Carbonate | 750 | 0.80 | 4.0 |
| Example 6 | Orthotitanic Acid | Lithium Carbonate | 950 | 0.80 | 0.5 |
| Comparative Example 1 | Metatitanic Acid | Lithium Hydroxide | 750 | 0.80 | 3.8 |
| Comparative Example 2 | AMT-400 | Lithium Carbonate | 750 | 0.80 | 2.5 |
| Comparative Example 3 | AMT-400 | Lithium Carbonate | 850 | 0.79 | 1.0 |
| Comparative Example 4 | AMT-400 | Lithium Carbonate | 950 | 0.77 | 0.5 |
| Comparative Example 5 | JA-1 | Lithium Carbonate | 750 | 0.80 | 3.2 |
| Comparative Example 6 | JA-1 | Lithium Carbonate | 950 | 0.76 | 0.8 |
| Comparative Example 7 | JR | Lithium Carbonate | 750 | 0.80 | 3.6 |
| Comparative Example 8 | JR | Lithium Carbonate | 950 | 0.75 | 0.5 |
| Comparative Example 9 | Orthotitanic Acid | Lithium Hydroxide | 750 | 0.80 | 4.1 |

It was found from Table 2 that in the method in which the raw material powder consisting of the lithium compound and the raw material powder consisting of the titanic acid compound were mixed and the resultant mixture was calcined, thereby manufacturing the lithium titanate, when the lithium carbonate was used as the lithium compound and the metatitanic acid or the orthotitanic acid was used as the titanic acid compound, the molar ratio of Li and Ti was controlled to be 0.80 which was a target value. In addition, it was found therefrom that the specific surface area of the above-mentioned lithium titanate was 4.0 m²/g or less and the range of specific surface areas of 10 m²/g or less, which is required in general to make the handling easy upon preparing the electrode mixture slurry, was sufficiently satisfied (refer to Examples 1 to 6).

In addition, it was found that also in the cases of the lithium titanate in Comparative Examples 1 and 9, in each of which the lithium hydroxide was used as the lithium source, the molar ratio of Li and Ti was controlled to be 0.80 which was the target value and the specific surface area was also adjusted to be in the range of 10 m²/g or less.

On the other hand, it was found that when as the titanic acid compound combined with the lithium carbonate, the titanium dioxide such as the anatase-type titanium dioxide or the rutile-type titanium dioxide was used, instead of the metatitanic acid or the orthotitanic acid, the molar ratio of Li and Ti was in the range of 0.75 to 0.80, there was a variation, and the molar ratio was not controlled (refer to Comparative Examples 2 to 8).

Next, the obtained lithium titanate was mixed with acetylene black as a conductive agent and PVDF as a binder at a rate of a weight ratio of 90 : 5 : 5, and NMP as a dispersion medium was added thereto, thereby preparing an electrode mixture slurry having a solid content of 30 wt%. This electrode mixture slurry was applied onto aluminum foil which was a current collector by using an applicator (#16) and thereafter, drying was conducted, thereby preparing an electrode containing the lithium titanate. The obtained electrode containing the lithium titanate was subjected to roll press with a clearance of 20 µm and thereafter, to punching by using an electrode punch, and the resultant, lithium metal which is a counter electrode, and LiPF₆/EC/DEC which is a nonaqueous electrolyte were used, thereby preparing a 2032-type coin cell.

With respect to the obtained coin cell, charging and discharging was conducted under conditions that a voltage range was 1.0V to 2.5V, a charging rate was 0.1C, and a discharging rate was 0.1C, and a discharge capacity at that time was measured, thereby evaluating initial characteristics. Subsequently, a discharge capacity was measured when charging and discharging was conducted under conditions that a voltage range was 1.0V to 2.5V and a charging rate was 0.1C and under conditions that respective discharging rates were 1C, 5C, and 10C, thereby evaluating rate characteristics. The result is shown in Table 3 and Table 4. In Table 3, the discharge capacity at each of the respective discharging rates is shown. In addition, in Table 4, as a capacity retention ratio, a relative discharge capacity at each of the respective discharging rates with respect to the discharge capacity (initial characteristics) at the discharging rate of 0.1C is shown with a percentage.

**[Table 3]**

| | Ti Raw Material | Li Raw Material | Calcining Temperature (°C) | C Rate | | | |
|---|---|---|---|---|---|---|---|
| | | | | 0.1 | 1 | 5 | 10 |
| | | | | Discharge Capacity (mAh/g) | | | |
| Example 1 | Metatitanic Acid | Lithium Carbonate | 723 | 150 | 148 | 143 | 135 |
| Example 2 | Metatitanic Acid | Lithium Carbonate | 750 | 156 | 155 | 154 | 148 |
| Example 3 | Metatitanic Acid | Lithium Carbonate | 850 | 161 | 160 | 142 | 130 |
| Example 4 | Metatitanic Acid | Lithium Carbonate | 950 | 165 | 163 | 137 | 108 |
| Example 5 | Orthotitanic Acid | Lithium Carbonate | 750 | 160 | 156 | 147 | 140 |
| Example 6 | Orthotitanic Acid | Lithium Carbonate | 950 | 166 | 158 | 140 | 118 |
| Comparative Example 1 | Metatitanic Acid | Lithium Hydroxide | 750 | 156 | 150 | 144 | 139 |
| Comparative Example 2 | AMT-400 | Lithium Carbonate | 750 | 141 | 131 | 119 | 107 |
| Comparative Example 3 | AMT-400 | Lithium Carbonate | 850 | 135 | 123 | 95 | 83 |
| Comparative Example 4 | AMT-400 | Lithium Carbonate | 950 | 132 | 101 | 79 | 63 |
| Comparative Example 5 | JA-1 | Lithium Carbonate | 750 | 92 | 58 | 46 | 35 |
| Comparative Example 6 | JA-1 | Lithium Carbonate | 950 | 87 | 46 | 32 | 22 |
| Comparative Example 7 | JR | Lithium Carbonate | 750 | 58 | 41 | 32 | 19 |
| Comparative Example 8 | JR | Lithium Carbonate | 950 | 50 | 33 | 26 | 18 |
| Comparative Example 9 | Orthotitanic Acid | Lithium Hydroxide | 750 | 159 | 148 | 126 | 114 |

**[Table 4]**

| | Ti Raw Material | Li Raw Material | Calcining Temperature (°C) | C Rate | | | |
|---|---|---|---|---|---|---|---|
| | | | | 0.1 | 1 | 5 | 10 |
| | | | | Capacity Retention Ratio (%) | | | |
| Example 1 | Metatitanic Acid | Lithium Carbonate | 723 | 100 | 99 | 95 | 90 |
| Example 2 | Metatitanic Acid | Lithium Carbonate | 750 | 100 | 99 | 99 | 95 |
| Example 3 | Metatitanic Acid | Lithium Carbonate | 850 | 100 | 99 | 88 | 81 |
| Example 4 | Metatitanic Acid | Lithium Carbonate | 950 | 100 | 99 | 83 | 65 |
| Example 5 | Orthotitanic Acid | Lithium Carbonate | 750 | 100 | 98 | 92 | 88 |
| Example 6 | Orthotitanic Acid | Lithium Carbonate | 950 | 100 | 95 | 84 | 71 |
| Comparative Example 1 | Metatitanic Acid | Lithium Hvdroxide | 750 | 100 | 96 | 92 | 89 |
| Comparative Example 2 | AMT-400 | Lithium Carbonate | 750 | 100 | 93 | 84 | 76 |
| Comparative Example 3 | AMT-400 | Lithium Carbonate | 850 | 100 | 91 | 70 | 61 |
| Comparative Example 4 | AMT-400 | Lithium Carbonate | 950 | 100 | 77 | 60 | 48 |
| Comparative Example 5 | JA-1 | Lithium Carbonate | 750 | 100 | 63 | 50 | 38 |
| Comparative Example 6 | JA-1 | Lithium Carbonate | 950 | 100 | 53 | 37 | 25 |
| Comparative Example 7 | JR | Lithium Carbonate | 750 | 100 | 71 | 55 | 33 |
| Comparative Example 8 | JR | Lithium Carbonate | 950 | 100 | 66 | 52 | 36 |
| Comparative Example 9 | Orthotitanic Acid | Lithium Hydroxide | 750 | 100 | 93 | 79 | 72 |

As shown in Table 3 and Table 4, the lithium titanate in all of Examples 1 to 6, in each of which the lithium carbonate was used as the lithium source and the metatitanic acid or the orthotitanic acid was used as the titanic acid compound combined with the lithium carbonate, exhibited higher charging and discharging characteristics as the electrode active material than the lithium titanate in Comparative Examples 2 to 8, in each of which as the titanium source combined with the lithium carbonate, the titanium dioxide such as the anatase-type titanium dioxide or the rutile-type titanium dioxide was used. Also in view of this, the lithium titanate in Examples 1 to 6 have less impurities than the lithium titanate in Comparative Examples 2 to 8 and is hence considered to have excellent crystallinity.

In addition, when Example 2 was compared with Comparative Example 1 in which the lithium titanate was prepared under the same conditions as in Example 2 except that the lithium hydroxide was used as the lithium source, it was found that the lithium titanate in Example 2 in which the lithium carbonate was used exhibited higher charging and discharging characteristics as the electrode active material than the lithium titanate in Comparative Example 1 in which the lithium hydroxide was used. In addition, the above-described result was also the same as when the lithium titanate in Example 5 was compared with Comparative Example 9 in which the lithium titanate was prepared under the same conditions as in Example 5 except that the lithium hydroxide was used as the lithium source. Judging from the result that any of the lithium titanate in Examples 2 and 5 and the lithium titanate in Comparative Examples 1 and 9 is structured of Li₄Ti₅O₁₂ which is of the substantially single phase (refer to Table 1), it is inferred that these differences in the charging and discharging characteristics may stem from differences in wettability and surface properties such as the specific surface area therebetween. This point will be separately described later.

In addition, in the lithium titanate in Examples 1 to 6, both in the case where the titanic acid compound was the metatitanic acid (Examples 1 to 4) and in the case where the titanic acid compound was the orthotitanic acid (Examples 5 and 6), the lithium titanate tends to exhibit high charging and discharging characteristics as the electrode active material when the calcining temperature is low. It is considered that the reasons for this are that the lower the calcining temperature is, the more the volatilization of the Li component is suppressed, thereby allowing the lithium titanate (Li₄Ti₅O₁₂) whose molar ratio of Li and Ti is controlled to be an ideal value (0.80) to be obtained and that the lower the calcining temperature is, the more grain growth is also suppressed, thereby making the specific surface area large.

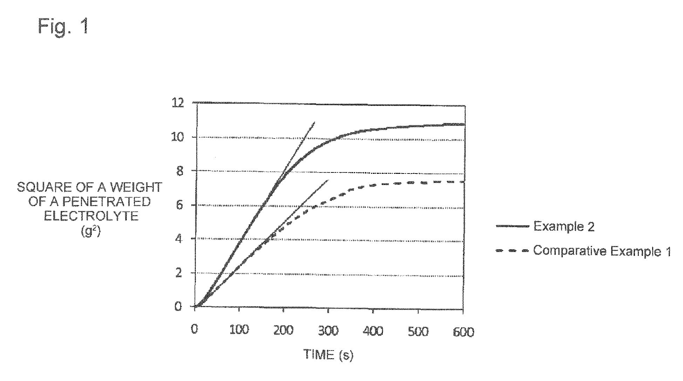

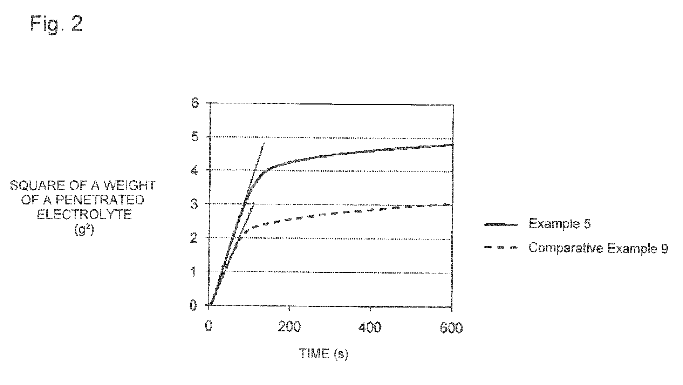

Next, wettability of the obtained lithium titanate to the nonaqueous electrolyte was evaluated. In the wettability evaluation, penetration speed measuring equipment (Peneto Analyzer PNT-N, manufactured by Hosokawa Micron Corporation) was used. In the evaluation method, first, a predetermined measuring cell was filled with a specimen and the specimen was subjected to tapping, thereby unifying a porosity to be 67%. This was immersed in a nonaqueous electrolyte (1 mol/L LiPF₆, EC : DEC (1 : 2) V/V%, manufactured by KISHIDA CHEMICAL Co., Ltd.) of a lithium ion secondary battery, and a change in a weight of the electrolyte penetrated into a layer of the specimen was measured. The result is shown in Fig. 1 and Fig. 2. Further, a penetration speed coefficient which is an index indicating the wettability was obtained from an initial gradient of each graph shown in Fig. 1 and Fig. 2. In the present invention, the penetration speed coefficient obtained under the above-mentioned conditions is defined as a "penetration speed coefficient to a nonaqueous electrolyte".

**[Table 5]**

| | Ti Raw Material | Li Raw Material | Calcining Temperature (°C) | Penetration Speed Coefficient (g²/s) |
|---|---|---|---|---|
| Example 2 | Metatitanic Acid | Lithium Carbonate | 750 | 0.044 |
| Example 5 | Orthotitanic Acid | Lithium Carbonate | 750 | 0.038 |
| Comparative Example 1 | Metatitanic Acid | Lithium Hydroxide | 750 | 0.027 |
| Comparative Example 9 | Orthotitanic Acid | Lithium Hydroxide | 750 | 0.029 |

As shown in Table 5, a penetration speed coefficient of the lithium titanate in Example 2, which was obtained by using the lithium carbonate as the lithium source and metatitanic acid as the titanic acid compound combined with the lithium carbonate, was 0.04 g²/s or more. On the other hand, a penetration speed coefficient of the lithium titanate in Example 5, which was obtained by using the lithium carbonate as the lithium source and the orthotitanic acid as the titanic acid compound combined with the lithium carbonate, was 0.03 g²/s or more. Accordingly, it was found that the lithium titanate in Examples 2 and 5 exhibited a high value, that is, favorable wettability, as compared with the lithium titanate in Comparative Examples 1 and 9, in each of which the lithium hydroxide was used as the lithium source.

In other words, the penetration speed coefficients of the lithium titanate Examples 2 and 5 obtained by using the lithium carbonate as the lithium source were 0.044 g²/s and 0.038 g²/s. On the other hand, the penetration speed coefficients of the lithium titanate in Comparative Examples 1 and 9 obtained by using the lithium hydroxide as the lithium source were 0.027 g²/s and 0.029 g²/s. Accordingly, it was found that each of the penetration speed coefficients of the lithium titanate obtained by using the lithium carbonate as a starting material was large by at least 10% or more, as compared with each of the penetration speed coefficients of the lithium titanate obtained by using the lithium hydroxide as a starting material.

As described above, if the wettability of the lithium titanate to the nonaqueous electrolyte is favorable, the insertion and desorption reaction of the Li ions in the charging and discharging smoothly proceeds. Therefore, it is considered that rate performance of the lithium ion secondary battery using the lithium titanate is also favorable. In fact, as shown in Table 3, the lithium titanate in Examples 2 and 5 exhibited an extremely high value of each of the discharge capacities at the discharge rate of 10C, as compared with the lithium titanate in Comparative Examples 1 and 9, each consisting of Li₄Ti₅O₁₂ which is of the substantially single phase, which correspond to Examples 2 and 5 and the lithium titanate in other Comparative Examples. Also judging from this, it is inferred that the wettability is an important influential factor for the rate performance.

It was found from the above-described results that when the lithium carbonate is used as the lithium source and the metatitanic acid or the orthotitanic acid is used as the titanic acid compound combined with the lithium carbonate, as a temperature at which the calcination is conducted, the temperature may be in a range of 723°C to 950°C, a favorable temperature is in a range of 723°C to 850°C, a more favorable temperature is in a range of 723°C to 800°C, and a most favorable temperature is 750°C.

## Claims

1. A method for manufacturing lithium titanate (Li₄Ti₅O₁₂), comprising: mixing a raw material powder consisting of a lithium compound and a raw material powder consisting of a titanic acid compound; and calcining the resultant mixture, the lithium compound being a lithium carbonate, the titanic acid compound being metatitanic acid or orthotitanic acid.

2. The method for manufacturing lithium titanate according to claim 1, wherein a temperature at which the calcination is conducted is in a range of 723°C to 950°C.

3. The method for manufacturing lithium titanate according to claim 1, wherein the temperature at which the calcination is conducted is in a range of 723°C to 800°C.

4. The method for manufacturing lithium titanate according to claim 1, wherein a period of time for which the calcination is conducted is 20 hours or less.

5. Lithium titanate (Li₄Ti₅O₁₂) obtained by employing the manufacturing method according to any of claim 1 to claim 4, the lithium titanate having a specific surface area of 10 m²/g or less, a penetration speed coefficient of the lithium titanate to a nonaqueous electrolyte being larger than a penetration speed coefficient of lithium titanate, obtained by using a lithium hydroxide as a starting material, to the same nonaqueous electrolyte, the lithium titanate consisting of Li₄Ti₅O₁₂ which is of a substantially single phase.

6. The lithium titanate according to claim 5, wherein the penetration speed coefficient of the lithium titanate obtained by using the lithium carbonate as the starting material is large by at least 10% or more, as compared with the penetration speed coefficient of the lithium titanate obtained by using the lithium hydroxide as the starting material.

7. The lithium titanate according to claim 6, wherein in powder X-ray diffraction measurement, with respect to a peak intensity exhibited when 2θ of Li₄Ti₅O₁₂ is 18°, respective relative intensities of an anatase-type titanium dioxide, a rutile-type titanium dioxide, the lithium carbonate, and Li₂TiO₃ are 5% or less.

8. A negative electrode for a lithium ion secondary battery in which the lithium titanate according to claim 5 is used as a negative electrode active material.

9. A positive electrode for a lithium ion secondary battery in which the lithium titanate according to claim 5 is used as a positive electrode active material.

10. A lithium ion secondary battery in which the negative electrode according to claim 8 or the positive electrode according to claim 9 is incorporated.

11. Lithium titanate obtained by using a lithium carbonate as a starting material, the lithium titanate having a specific surface area of 10 m²/g or less, a penetration speed coefficient of the lithium titanate to a nonaqueous electrolyte being larger than a penetration speed coefficient of lithium titanate, obtained by using a lithium hydroxide as a starting material, to the same nonaqueous electrolyte, the lithium titanate consisting of Li₄Ti₅O₁₂ which is of a substantially single phase.

12. The lithium titanate according to claim 11, wherein the penetration speed coefficient of the lithium titanate obtained by using the lithium carbonate as the starting material is large by at least 10% or more, as compared with the penetration speed coefficient of the lithium titanate obtained by using the lithium hydroxide as the starting material.
